# EUROPÄISCHE PATENTSCHRIFT

(11) **EP 1 270 122 B1**
(45) Veröffentlichungstag und Bekanntmachung des Hinweises auf die Patenterteilung: **21.07.2004**
(21) Anmeldenummer: 02010999.7
(22) Anmeldetag: 17.05.2002
(51) Int. Cl.: B23C 5/20, B23B 27/00

(54) **Schneidwerkzeug mit Schnittaufteilung**
Cutting tool with cutting division
Outil de coupe avec partage de coupe

(30) Priorität: 28.06.2001 DE 10131357
(43) Veröffentlichungstag der Anmeldung: 02.01.2003
(73) Patentinhaber: Fette GmbH, 21493 Schwarzenbek (DE)
(72) Erfinder: Popke, Herbert, Prof. Dr., 39179 Ebendorf (DE)
(74) Vertreter: Patentanwälte Hauck, Graalfs, Wehnert, Döring, Siemons, Schildberg

(56) Entgegenhaltungen:
- EP-A- 0 300 247
- EP-A- 0 548 752
- EP-A- 0 775 547
- WO-A-98/07539
- US-A- 5 466 097
- US-A- 5 622 461

## Beschreibung

Die Erfindung bezieht sich auf ein Schneidwerkzeug nach dem Oberbegriff des Patentanspruchs 1 oder 2. Insbesondere bezieht sich die Erfindung auf ein Schneidwerkzeug mit mindestens einer Schneidplatte, die an einem Trägerkörper befestigbar ist und die bei der relativen Rotation des Schneidwerkzeugs gegenüber einem Werkstück in spanenden Eingriff gelangt, wenn der Trägerkörper oder das Werkstück zugleich einen linearen Vorschub erfährt.

Ein typisches Beispiel für ein derartiges Schneidwerkzeug ist ein Plan- oder Eckfräser, der beispielsweise mit Wendeschneidplatten bestückt ist. Die Wendeschneidplatten sind typischerweise in einer vorgegebenen Teilung gleichmäßig am Umfang des Trägerkörpers angebracht.

Wendeschneidplatten sind bei derartigen Werkzeugen allgemein üblich, aber auch bei speziellen Bohrwerkzeugen, Reibahlen oder dergleichen. Eine andere Anwendung ist die für Drehwerkzeuge. Die nachfolgend zu erläuternde Erfindung ist nicht auf die Verwendung von Wendeschneidplatten beschränkt, obwohl zu Erläuterungszwecken hierauf im Wesentlichen eingegangen wird.

Die Wendeschneidplatten werden üblicherweise entweder unmittelbar in entsprechenden Taschen des Trägerkörpers in bekannter Weise eingespannt oder auch mit Hilfe von sogenannten Kassetten, die ihrerseits in Taschen des Trägerkörpers befestigt werden.

Für die Wirkungsweise eines derartigen Schneidwerkzeugs, z.B. Fräswerkzeug, ist die Positionierung der Schneidkante relativ zur Achse des Trägerkörpers von Bedeutung. Maßgebend sind der Axialwinkel, der Radialwinkel und der Einstellwinkel. Axialwinkel meint die Relativlage einer Schneidplatte bzw. ihrer Schneide gegenüber der Rotationsachse des Fräskörpers. Der Radialwinkel ist der Winkel zwischen der Fräsplattenebene und einem Radius des Trägerkörpers. Der Einstellwinkel ist der Winkel, den die Schneidkante in Bezug auf die Zustellrichtung des Werkzeugs aufweist. Üblicherweise sind alle Winkel ungleich 90°. Aus naheliegenden Gründen wird angestrebt, dass der Eingriff der Schneidkante am Werkstück nicht über die gesamte Länge der Schneidkante gleichzeitig erfolgt, sondern von einem Ende ausgehend, allmählich. Dadurch werden die Belastung der Schneidplatte bzw. der Schneidkante minimiert sowie die Schwingungen, die naturgemäß beim Zerspanen mit mehreren Schneidplatten durch deren Aufschläge auftreten.

Bei der Zerspanung mit den beschriebenen Schneidwerkzeugen spielt eine Reihe von Parametern eine Rolle. Erwünscht ist ein hohes Spanvolumen pro Zeiteinheit bei minimaler Belastung der Schneidkante und einem Minimum an Schnittkraft. Die Schnittkraft beeinflusst naturgemäß den Energieverbrauch einer Zerspanoperation. Hohe Schneidenbelastungen führen zu kurzen Standzeiten und damit zu Auswechselvorgängen, die zeitraubend sind und die gesamte Fertigungszeit beeinflussen. Ferner wird der Fertigungsaufwand durch unterschiedliche Gegebenheiten beim Einsatz von Schneidplatten beeinflusst. Bei der herkömmlichen Zerspanungstechnik haben die Schneidplatten eine identische Position und Ausrichtung am Trägerkörper, sodass zumeist nur bestimmte Bereiche einer Schneidkante einer besonderen Belastung unterliegen. Sobald der am meisten beanspruchte Bereich der Schneidkante nicht mehr einsatzfähig ist, muss die Schneidplatte ausgetauscht oder gewendet werden. Dies führt zu einer unvollständigen Ausnutzung einer Schneidplatte.

Es ist bekannt, durch eine unterschiedliche Teilung am Umfang des Trägerkörpers für die Anordnung der Schneidplatten eine dämpfende Wirkung zu erzielen.

Aus EP 0 480 576 und EP 0 585 871 sind Wendeschneidplatten bekannt geworden, bei denen die Schneidkanten in Schneidkantenabschnitte unterteilt sind, zwischen denen jeweils eine Stufe liegt. Zwischen den Stufen steigen die Schneidkantenabschnitte rampenartig an, und die Anordnung ist dergestalt, dass die Schneidkantenabschnitte im Stufenbereich sich überlappen. Es ist angestrebt, hierdurch ein Rattern zu vermeiden bzw. zu minimieren und separate Spanabschnitte zu erzeugen. Der Einstellwinkel ist bei den bekannten Schneidplatten über die Länge ihrer Schneidkante konstant.

Aus EP 0 814 932 ist eine Schneidplatte bekannt geworden, bei der die Schneidkante ebenfalls in gestufte Schneidkantenabschnitte unterteilt ist, wobei der Übergang der Stufen so gewählt ist, dass ein stumpfer Winkel gebildet wird. Außerdem liegen die Schneidkantenabschnitte auf dem Mantel eines gedachten Zylinders. Mit der bekannten Schneidplatte soll die spanbrechende Eigenschaft verbessert, die Schneidkraft verringert und die Abnutzung minimiert werden.

Der Erfindung liegt die Aufgabe zugrunde, ein Schneidwerkzeug der gattungsgemäßen Art so zu verbessern, dass die Schnittkraft minimiert wird bzw. bei gleicher Maschinenleistung ein höheres Spanvolumen erhalten werden kann. Außerdem soll die Aufgabe darin bestehen, die Ausnutzung der Schneidplatten zu verbessern.

Diese Aufgabe wird durch die Merkmale des Patentanspruchs 1 oder 2 gelöst.

Vorteilhafte Ausgestaltungen sind in den Unteransprüchen 3-11 beschrieben.

Die Schnitttiefe wird durch die Zustellung des Schneidwerkzeugs oder des Werkstücks in der Maschine bestimmt. Bei herkömmlichen Schneidwerkzeugen ist die Zustellung derart, dass über die Länge der durchgehenden Schneidkante der größere Bereich mit dem Werkstück in Eingriff gelangt. Bei der Erfindung hingegen kommen nur Abschnitte der Schneidkante einer Schneidplatte jeweils mit dem Werkstück in Eingriff. Bei dem erfindungsgemäßen Schneidwerkzeug ist die mindestens eine Schneidkante ebenfalls in gestufte Abschnitte unterteilt. Erfindungswesentlich ist jedoch, dass der Einstellwinkel der Schneidkantenabschnitte unterschiedlich ist. Die Erfindung sieht mithin eine Schnittaufteilung bezüglich der zum Einsatz gelangenden Schneidkante vor und kann dabei den Einstellwinkel je nach Lage des Schneidkantenabschnitts einen unterschiedlichen Eingriff am Werkzeug vornehmen. Bekanntlich ist der "unterste" Endbereich einer Schneidkante am meisten dem Verschleiß ausgesetzt. Dieser wird dadurch reduziert, dass der Einstellwinkel relativ klein gemacht wird. Um gleichwohl ein großes Spanvolumen zu erzielen, kann der Einstellwinkel für den übrigen oder oberen Bereich der Schneidkante erhöht werden. Mit Hilfe der Erfindung lässt sich daher die Standzeit an den Schneidenenden, die, wie erwähnt, am höchsten belastet sind, erhöhen oder die Produktivität steigern. Diese Vorteile können erzielt werden, ohne dass an der herkömmlichen Teilung am Trägerwerkzeug und der Aufnahme der Schneidplatte am Trägerkörper etwas geändert werden muss.

Bei dem erfindungsgemäßen Schneidwerkzeug kann der Versatz der Schneidkanten in Schnittrichtung erfolgen oder in Vorschubrichtung. Sind drei oder mehr Schneidkantenabschnitte vorgesehen, kann zwischen benachbarten Schneidkantenabschnitten sowohl ein Versatz in Schnittrichtung als auch ein Versatz in Vorschubrichtung erfolgen. Vorzugsweise verringert sich der Einstellwinkel vom obersten Abschnitt der Schneidkante zu den unteren Abschnitten hin. Mit "unten" und "oben" ist gemeint, dass das am weitesten eintauchende Ende der Schneidkante das untere Ende ist und dementsprechend das andere das obere.

Ausführungsbeispiele der Erfindung werden nachfolgend anhand von Zeichnungen näher erläutert.
- Fig. 1: zeigt schematisch perspektivisch eine Schneidplatte nach der Erfindung in einer ersten Ausführungsform.
- Fig. 2: zeigt schematisch perspektivisch eine zweite Ausführungsform einer Schneidplatte nach der Erfindung.
- Fig. 3: zeigt schematisch perspektivisch eine dritte Ausführungsform einer Schneidplatte nach der Erfindung.
- Fig. 4: zeigt eine Draufsicht auf die Schneidplatte nach Fig. 3 im Eingriff mit einem Werkstück.
- Fig. 5: zeigt schematisch perspektivisch eine vierte Ausführungsform nach der Erfindung.
- Fig. 6: zeigt eine Draufsicht auf die Platte nach Fig. 5 in Eingriff mit einem Werkstück.
- Fig. 7: zeigt schematisch perspektivisch eine fünfte Ausführungsform einer Schneidplatte nach der Erfindung.

Die in den Zeichnungen dargestellten Ausführungsformen zeigen eine Schneidwendeplatte von annähernd quadratischem Umriss. Bei den nachstehenden Erläuterungen wird jedoch lediglich eine Seite der Wendeschneidplatten beschrieben. Eine nähere Erläuterung zu den Spanflächen und den Freiflächen erfolgt nicht. Darüber hinaus ist der Trägerkörper, der zusammen mit mindestens einer der Wendeschneidplatten, z.B. ein Fräswerkzeug, z.B. einen Planfräser oder ein Druckwerkzeug bildet, ebenfalls nicht dargestellt. Angedeutet sind lediglich die Einstellwinkel der Schneidkanten bzw. der Schneidplatten mit dem Winkel κ. Die übrigen wesentlichen Winkel, wie Axialwinkel und Radialwinkel sind ebenfalls nicht angedeutet. Sie bewegen sich in dem für den Fachmann üblichen und bevorzugten Rahmen. Schließlich ist auch die Anbringung der Wendeschneidplatten nicht dargestellt. Sie kann mit Hilfe üblicher Klemmmechanismen über eine mittige Bohrung in den Schneidplatten oder auch mittels Kassetten erfolgen.

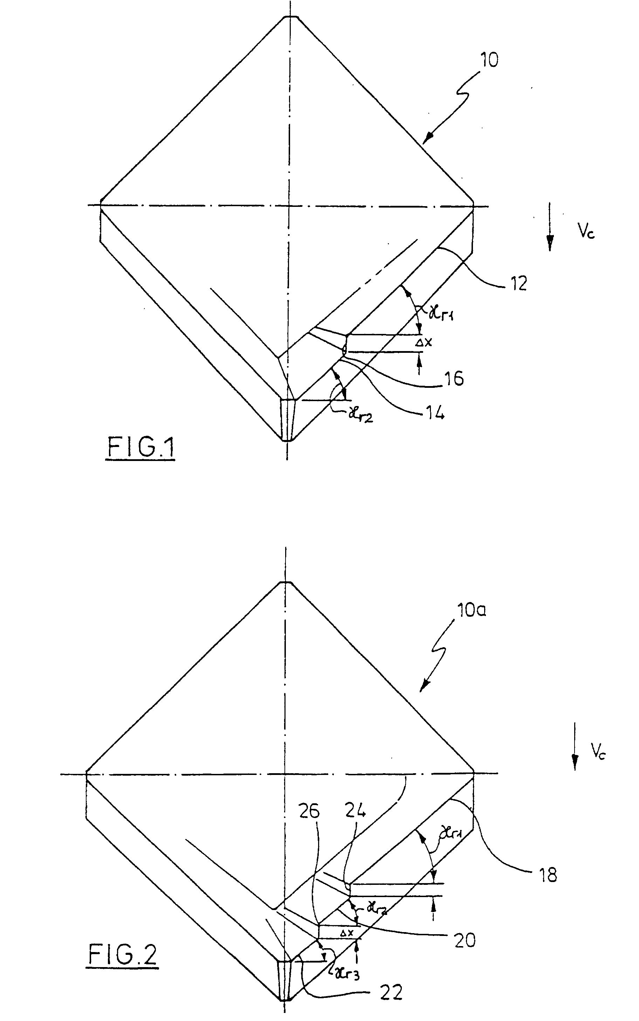

Die Wendeschneidplatte 10 nach Fig. 1 weist für die deutlicher herausgestellte Schneidkante zwei versetzte Schneidkantenabschnitte 12 und 14 auf, welche durch eine Stufe 16 ineinander übergehen. Eingesetzt in einen Träger hat der Schneidkantenabschnitt 12 einen Einstellwinkel von κᵣ₁ und der Schneidkantenabschnitt 14 einen Einstellwinkel von κᵣ₂. Dabei ist κᵣ₁ größer als κᵣ₂. Die Schnittrichtung ist durch den Pfeil V_{c} angedeutet. Die Höhe der Stufe ist mit ΔX angegeben. Die in Fig. 1 dargestellte Wendeschneidplatte ist daher in der Schnittrichtung einmal geteilt. Auf diese Weise werden zwei getrennte Späne erhalten.

Die Schneidkante der Wendeschneidplatte nach Fig. 2 ist in drei versetzte Schneidkantenabschnitte 18, 20 und 22 unterteilt, die jeweils eine Stufe 24, 26 bilden, vergleichbar der Stufe 16 nach Fig. 1. Der Schneidkantenabschnitt 18 hat wiederum einen Einstellwinkel von κᵣ₁, der Schneidkantenabschnitt 20 einen Einstellwinkel von κᵣ₂ und der Schneidkantenabschnitt 22 einen Einstellwinkel von κᵣ₃. Dabei ist κᵣ₁ größer als κᵣ₂ und κᵣ₂ größer als κᵣ₃. Die Höhe der Stufen beträgt jeweils ΔX. Man erkennt, dass der Schneidkantenabschnitt, der im "tieferen" Bereich mit dem Werkstück in Eingriff ist, einen kleineren Einstellwinkel aufweist als die höher gelegenen Schneidkantenabschnitte. Dies führt zu einer Entlastung der am stärksten belasteten Schneidkantenbereiche. Wie ferner erkennbar, liegt der Versatz der Schneidkantenabschnitte der obigen Ausführungen in Schnittrichtung V_{c}.

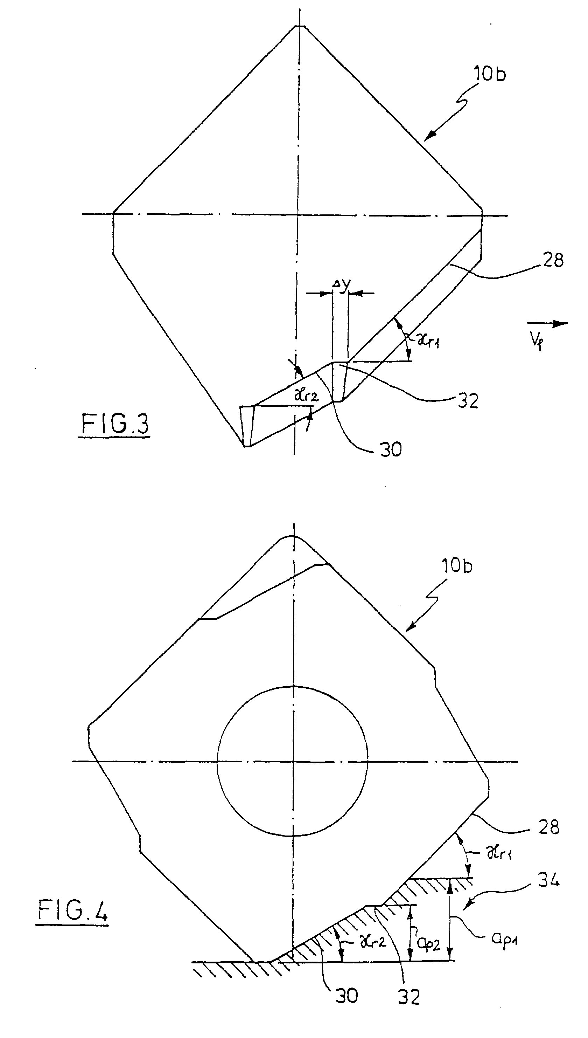

Die Wendeschneidplatte 10b nach Fig. 3 ist im Hinblick auf ihre Schneidkante wiederum in zwei Schneidkantenabschnitte 28, 30 unterteilt, zwischen denen eine Stufe 32 liegt. Die Stufe erstreckt sich in Vorschubrichtung V_{f}des Werkzeugs, was besonders gut aus Fig. 4 zu erkennen ist. In Fig. 4 ist bei 34 auch das Werkstück angedeutet, mit dem die Wendeschneidplatte 10b in Eingriff ist. Der Eingriffsbereich ist durch eine Strichelung angedeutet. Es ist ferner zu erkennen, dass der Einstellwinkel κ2 des Schneidkantenabschnitts 30 z.B. 30° und der des Schneidkantenabschnitts 28 κ1 z.B. 45° beträgt. Dabei übernimmt der Schneidkantenabschnitt 30 den wesentlichen Teil der Frästiefe aₚ₂ z.B. , hier 2 mm, während der Schneidkantenabschnitt 28 nur einen Anteil (aₚ₁-aₚ₂) z.B. von 1 mm übernimmt. Der Versatz Δy beträgt z.B. 0,5 mm.

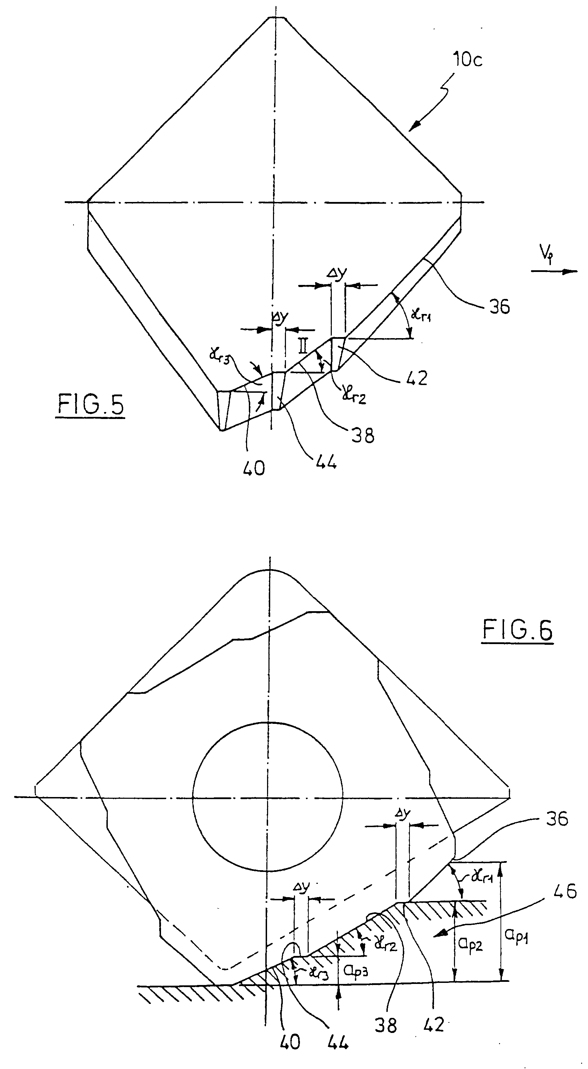

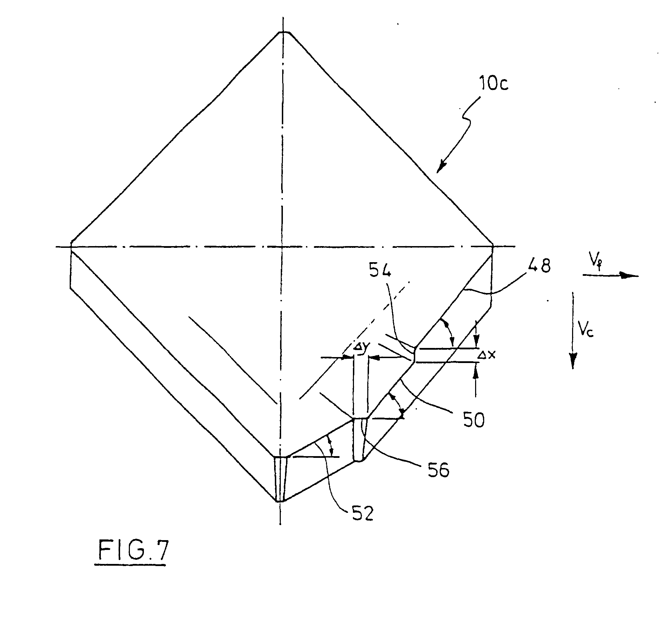

Bei der Schneidplatte nach Fig. 5 ist eine Unterteilung der Schneidkante in Vorschubrichtung zweifach vorgenommen, wie durch die Schneidkantenabschnitte 36, 38, 40 zu erkennen, zwischen denen die Stufen 42, 44 liegen, die sich wiederum in Vorschubrichtung erstrecken, wie insbesondere aus Fig. 6 hervorgeht. Aus Fig. 6 ist zu erkennen, dass der Einstellwinkel κᵣ₁ z.B. 45°, der Einstellwinkel κᵣ₂ z.B. 30° und der Einstellwinkel κᵣ₃ z.B. 25° beträgt. Mithin ist der Schneidkantenabschnitt 40, der am tiefsten mit dem Werkstück 46 in Eingriff ist, mit dem kleinsten Einstellwinkel versehen, während der Einstellwinkel sich nach "oben" zunehmend vergrößert. In Fig. 6 ist ferner zu erkennen, dass der Schneidkantenabschnitt 40 z.B. aₚ₃ z.B. gleich 1 mm, der Schneidkantenabschnitt 38 (aₚ₂-aₚ₃) z.B. gleich 2 mm und der Schneidkantenabschnitt 36 keinen Anteil an der Frästiefe übernimmt. Der Versatz in Vorschubrichtung Δy ist z.B. 0,5 mm. Dies entspricht auch dem Versatz Δy nach Fign. 3 und 4.

Die Wendeschneidplatte nach Fig. 7 ist im Hinblick auf ihre Schneidkante wiederum in drei Abschnitte unterteilt, nämlich in die Abschnitte 48, 50 und 52, wobei die Abschnitte 48, 50 durch eine Stufe 54, die in Schnittrichtung V_{c} verläuft, ineinander übergehen, während die Abschnitte 50, 52 über die Stufe 56 ineinander übergehen, die in Vorschubrichtung V_{f} verläuft. Mithin zeigt die Ausführungsform nach Fig. 7 sowohl eine Schnittaufteilung in Schnittrichtung als auch eine in Vorschubrichtung. Hinsichtlich der Einstellwinkel gilt Gleiches wie zur Ausführungsform nach Fign. 5 und 6.

Es ist bekannt, den Verlauf der Schneidkanten relativ zur Unterseite der Wendeschneidplatten geneigt auszuführen, um den Eingriff am Werkstück weicher zu machen. Diese Möglichkeit kann bei den gezeigten Ausführungsformen nach den Figuren 1 bis 7 ebenfalls in Frage kommen. Dargestellt ist sie jedoch nicht.

Wie einleitend bemerkt, ist die Erfindung nicht auf rotierende Schneidwerkzeuge, wie Fräser oder dergleichen, beschränkt, sondern umfasst auch stationäre Schneidwerkzeuge, wie z.B. Drehwerkzeuge, die ein rotierendes Werkstück bearbeiten.

## Patentansprüche

1. Schneidwerkzeug mit mindestens einer an einem um eine zentrale Achse rotierenden Trägerkörper befestigten Schneidplatte (10, 10a, 10b, 10c), die mindestens eine Schneidkante aufweist, die mit einem Werkstück (34) in spanenden Eingriff gelangt, wenn der Trägerkörper rotiert und zugleich einen linearen Vorschub erfährt, wobei die Schneidplatte (10, 10a, 10b, 10c) auf eine vorgegebene Schnitttiefe zustellbar ist, **dadurch gekennzeichnet, daß** die Schneidkante der Schneidplatte (10, 10a, 10b, 10c) aus mindestens zwei Schneidkantenabschnitten (12, 14, 18, 20, 22, 28, 30, 36, 38, 40, 48, 50, 52) besteht, die mit einem unterschiedlichen Einstellwinkel (κ) jeweils einen Teilbeitrag an der vorgegebenen Schnitttiefe leisten und daß zwischen den Schneidkantenabschnitten (12, 14, 18, 20, 22, 28, 30, 36, 38, 40, 48, 50, 52) der Schneidplatte (10, 10a, 10b, 10c) ein Versatz Δx, Δy in Schnittrichtung V_{c} und/oder in Vorschubrichtung V_{f} vorgesehen ist.

2. Schneidwerkzeug mit mindestens einer an einem Trägerkörper befestigten Schneidplatte, die mindestens eine Schneidkante aufweist für den spanenden Eingriff mit einem rotierenden Werkstück, das einen linearen Vorschub erfährt, wobei die Schneidplatte auf eine vorgegebene Schnitttiefe zustellbar ist, **dadurch gekennzeichnet, daß** die Schneidkante der Schneidplatte aus mindestens zwei Schneidkantenabschnitten besteht, die mit einem unterschiedlichen Einstellwinkel (κ) jeweils einen Teilbeitrag an der vorgegebenen Schitttiefe leisten und daß zwischen den Schneidkantenabschnitten der Schneidplatte einen Versatz Δx, Δy in Schnittrichtung V_{c} und/oder in Vorschubrichtung V_{f} vorgesehen ist.

3. Schneidwerkzeug nach Anspruch 1 oder 2, **dadurch gekennzeichnet, dass** der Anteil der Schneidkantenabschnitte an der Schnitttiefe gleich ist.

4. Schneidwerkzeug nach Anspruch 1 oder 2, **dadurch gekennzeichnet, dass** der Anteil der Schneidkantenabschnitte an der Schnitttiefe unterschiedlich ist.

5. Schneidwerkzeug nach einem der Ansprüche 1 bis 4, **dadurch gekennzeichnet, dass** der Einstellwinkel (κ) des die Resttiefe erzeugenden Schneidkantenabschnitts größer als der des darunter angeordneten Schneidkantenabschnitts ist.

6. Schneidwerkzeug nach einem der Ansprüche 1 bis 4, **dadurch gekennzeichnet, dass** der Einstellwinkel des Schneidkantenabschnitts, der die Resttiefe erzeugt, kleiner ist als des darunter angeordneten Schneidkantenabschnitts.

7. Schneidwerkzeug nach einem der Ansprüche 1 bis 6, **dadurch gekennzeichnet, dass** ein Übergang zwischen den Schneidkantenabschnitten (12, 14; 18, 20, 22) um etwa zweimal 90° erfolgt.

8. Schneidwerkzeug nach Anspruch 8, **dadurch gekennzeichnet, dass** die den Schneidkantenabschnitten zugeordneten Spanflächen am Übergang eine Stufe bilden.

9. Schneidwerkzeug nach einem der Ansprüche 1 bis 8, **dadurch gekennzeichnet, dass** bei drei oder mehr Schneidkantenabschnitten (48, 50, 52) sowohl ein Versatz Δx, Δy in Schnittrichtung V_{c} als auch in Vorschubrichtung V_{f} vorgesehen ist.

10. Schneidwerkzeug nach einem der Ansprüche 1 bis 9, **dadurch gekennzeichnet, dass** die Schneidplatten Wendeschneidplatten (10a bis 10c) sind.

11. Schneidwerkzeug nach einem der Ansprüche 1 bis 10, **dadurch gekennzeichnet, dass** die Schneidplatten in einer Kassette eingespannt sind, die ihrerseits am Trägerkörper eingespannt ist.

## Claims

1. A cutting tool with a holder body rotating about a central axis on which at least one cutting blade (10, 10a, 10b, 10c) is mountable which has at least one cutting edge that gets in a metal-cutting engagement with a workpiece (34) when the holder body rotates while simultaneously undergoing a linear forward feed, wherein the cutting blade (10, 10a, 10b, 10c) is adapted to be advanced to a predetermined cutting depth, **characterized in that** the cutting edge of the cutting blade (10, 10a, 10b, 10c) is comprised of at least two cutting edge portions (12, 14, 18, 20, 22, 28, 30, 36, 38, 40, 48, 50, 52) that they make a partial contribution each to the predetermined cutting depth by means of a different setting angle (κ) and **in that** between the cutting edge portions (12, 14, 18, 20, 22, 28, 30, 36, 38, 40, 48, 50, 52) an offset Δx, Δy in cutting direction V_{c} and/or in feed direction V_{f} is provided.

2. A cutting tool having a holder body to which at least one cutting blade is attachable which has at least one cutting edge that gets into a chip-cutting engagement with a rotary workpiece, and undergoes a linear feed motion with the cutting blade being adapted to be advanced to a predetermined cutting depth, **characterized in that** the cutting edge of the cutting blade is comprised of at least two cutting edge portions which by a different setting angle (κ) make a partial contribution each to the predetermined cutting depth and that between the cutting edge portion of the cutting blade an offset Δx, Δy in cutting direction and/or feed direction V_{f} is provided.

3. The cutting tool as claimed in claim 1 or 2, **characterized in that** the share contributed by the cutting edge portions to the cutting depth is equal.

4. The cutting tool as claimed in claim 1 or 2, **characterized in that** the share contributed by the cutting edge portions to the cutting depth is different.

5. The cutting tool as claimed in any one of claims 1 to 4, **characterized in that** the setting angle (κ) of the cutting edge producing the remaining depth is larger than that of the other cutting edge portion disposed there above.

6. The cutting tool as claimed in any one of claims 1 to 4, **characterized in that** the setting angle of the cutting edge portion producing the remaining depth is smaller than that of the other cutting edge portion disposed there below.

7. The cutting tool as claimed in one of the claims 1 to 6, **characterized in that** a transition between the cutting blade portions (12, 14; 18, 20, 22) is accomplished by about twice 90°.

8. The cutting tool as claimed in claim 7, **characterized in that** the rake surfaces associated with the cutting edge portions form a step at the transition.

9. The cutting tool as claimed in claims 1 to 8, **characterized in that** if there are three or more cutting edge portions (48, 50, 52) an offset Δx, Δy is provided in the direction of cut V_{c} and an offset is provided in the direction of feed V_{f}.

10. The cutting tool as claimed in any one of claims 1 to 9, **characterized in that** the cutting blades are reversible cutting blades (10a to 10c).

11. The cutting tool as claimed in any one of claims 1 to 10, **characterized in that** the cutting blades are loaded in a cassette which, in turn, is clamped on the holder body.

## Revendications

1. Outil de coupe comportant au moins une plaque de coupe (10, 10a, 10b, 10c) fixée à un support tournant autour d'un axe central et comportant au moins une arête coupante, qui vient en prise d'usinage avec un outil (34) lorsque le support tourne et est soumis simultanément à une avance linéaire, la plaque de coupe (10, 10a, 10b, 10c) étant réglable sur une profondeur de coupe donnée, **caractérisé en ce que** l'arête coupante de la plaque de coupe (10, 10a, 10b, 10c) est composée d'au moins deux parties d'arête coupante (12, 14, 18, 20, 22, 28, 30, 36, 38, 40, 48, 50, 52) qui, avec un angle de réglage (κ) différent, apportent chacun une contribution partielle à la profondeur de coupe donnée, et **en ce que**, entre les parties d'arête coupante (12, 14, 18, 20, 22, 28, 30, 36, 38, 40, 48, 50, 52) de la plaque de coupe (10, 10a, 10b, 10c), il est prévu un déport Δx, Δy dans la direction de coupe V_{c} et/ou dans la direction d'avance V_{f}.

2. Outil de coupe comportant au moins une plaque de coupe fixée à un support et comportant au moins une arête coupante pour la mise en prise d'usinage avec un outil tournant qui est soumis à une avance linéaire, la plaque de coupe étant réglable sur une profondeur de coupe donnée, **caractérisé en ce que** l'arête coupante de la plaque de coupe est composée d'au moins deux parties d'arête coupante qui, avec un angle de réglage (κ) différent, apportent chacun une contribution partielle à la profondeur de coupe donnée, et **en ce que**, entre les parties d'arête coupante de la plaque de coupe, il est prévu un déport Δx, Δy dans la direction de coupe V_{c} et/ou dans la direction d'avance V_{f}.

3. Outil de coupe selon la revendication 1 ou 2, **caractérisé en ce que** la contribution des parties d'arête coupante à la profondeur de coupe est égale.

4. Outil de coupe selon la revendication 1 ou 2, **caractérisé en ce que** la contribution des parties d'arête coupante à la profondeur de coupe est différente.

5. Outil de coupe selon l'une des revendications 1 à 4, **caractérisé en ce que** l'angle de réglage (κ) de la partie d'arête coupante produisant la profondeur restante est plus grand que l'angle de réglage de la partie d'arête coupante placée au-dessous.

6. Outil de coupe selon l'une des revendications 1 à 4, **caractérisé en ce que** l'angle de réglage de la partie d'arête coupante qui produit la profondeur restante est plus petit que l'angle de réglage de la partie d'arête coupante placée au-dessous.

7. Outil de coupe selon l'une des revendications 1 à 6, **caractérisé en ce qu'**il se produit, entre les parties (12, 14, 18, 20, 22) d'arête coupante, une transition d'environ deux fois 90°.

8. Outil de coupe selon la revendication 7, **caractérisé en ce que** les surfaces d'usinage associées aux parties d'arête coupante forment à la transition une marche.

9. Outil de coupe selon l'une des revendications 1 à 8, **caractérisé en ce qu'**il est prévu pour trois ou plus de trois parties d'arête coupante (48, 50, 52) un déport Δx, Δy dans la direction de coupe V_{c} ainsi que dans la direction d'avance V_{f}.

10. Outil de coupe selon l'une des revendications 1 à 9, **caractérisé en ce que** les plaques de coupe sont des plaques de coupe réversibles (10a à 10c).

11. Outil de coupe selon l'une des revendications 1 à 10, **caractérisé en ce que** les plaques de coupe sont fixées dans une cassette qui, de son côté, est fixée au support.
